# EUROPÄISCHE PATENTSCHRIFT

(11) **EP 0 755 483 B1**
(45) Veröffentlichungstag und Bekanntmachung des Hinweises auf die Patenterteilung: **21.03.2001**
(21) Anmeldenummer: 95939209.3
(22) Anmeldetag: 27.11.1995
(51) Int. Cl.: F02D 41/40, F02D 41/26, F02D 41/24, F02D 41/34

(54) **SYSTEM ZUR STEUERUNG EINER BRENNKRAFTMASCHINE**
INTERNAL COMBUSTION ENGINE CONTROL SYSTEM
SYSTEME DE COMMANDE DE MOTEURS A COMBUSTION INTERNE

(30) Priorität: 15.12.1994 DE 4444751
(43) Veröffentlichungstag der Anmeldung: 29.01.1997
(73) Patentinhaber: ROBERT BOSCH GMBH, 70442 Stuttgart (DE)
(72) Erfinder: KLATT, Roland, D-74232 Abstatt (DE); SASSEN, Klaus, D-71706 Markgröningen (DE); BECKMANN, Jörn, D-71282 Hemmingen (DE); MÖSSNER, Bernd, D-73529 Schwäbisch Gmünd (DE); HAUSSMANN, Bernd, D-74343 Sachsenheim (DE)
(86) Internationale Anmeldenummer: DE9501669
(87) Internationale Veröffentlichungsnummer: WO9618812

(56) Entgegenhaltungen:
- EP-A- 0 481 912
- WO-A-93/20346
- DE-A- 3 820 279
- DE-A- 4 330 906
- US-A- 4 800 860
- SOCIETY OF AUTOMOTIVE ENGINEERS,INC., Nr. sae860145, 1987 WARRENDALE, Seiten 1777-1788, KEIICHI YAMADA ET AL. 'The Second Generation of Electronic Diesel Fuel Injection Systems-Investigation With a Rotary Pump.'

## Beschreibung

### Stand der Technik

Die Erfindung betrifft ein System zur Steuerung einer Brennkraftmaschine gemäß dem Oberbegriff des unabhängigen Anspruchs 1.

Ein solches System zur Steuerung einer Brennkraftmaschine ist aus der DE-OS 41 08 639 bekannt. Dieses System wird insbesondere zur Steuerung einer Dieselbrennkraftmaschine verwendet. Mittels eines Magnetventils kann der Beginn und das Ende der Kraftstoffzumessung festgelegt werden. Bei der bekannten Vorrichtung und bei dem bekannten Verfahren ist die Mengensteuerung mit einer Ungenauigkeit behaftet.

Die WO 93/20346 beschreibt ein Verfahren zur Impulsvervielfachung, bei dem der Abstand zwischen zwei Impulsen in eine Vielzahl von Teilimpulsen aufgeteilt wird. Dabei wird ausgehend von den zurückliegenden Impulsen der Abstand von zwei aufeinanderfolgenden zukünftigen Impulsen in eine Vielzahl von Teilimpulsen mit sehr kleinem Abstand aufgeteilt. Hierzu wird die Anzahl der Teilimpulse geschätzt, die zwischen zwei Impulsen voraussichtlich auftreten. Dabei zählt ein erster Zähler die Impulse des Impulsgebers und zweiter Zähler die Teilimpulse.

### Aufgabe der Erfindung

Der Erfindung liegt die Aufgabe zugrunde, bei einem System zur Steuerung einer Brennkraftmaschine der eingangs genannten Art die Genauigkeit der Kraftstoffzumessung zu verbessern. Diese Aufgabe wird durch die in den unabhängigen Ansprüchen gekennzeichneten Merkmale gelöst.

### Vorteile der Erfindung

Mittels des erfindungsgemäßen Verfahrens und der erfindungsgemäßen Vorrichtung ist eine wesentlich genauere Kraftstoffzumessung möglich. Vorteilhafte und zweckmäßige Ausgestaltungen der Erfindung sind in den Unteransprüchen gekennzeichnet.

### Zeichnung

Die Erfindung wird nachstehend anhand der in der Zeichnung dargestellten Ausführungsformen erläutert. Es zeigen die Figuren 1 ein Blockdiagramm der erfindungsgemäßen Vorrichtung, Figur 2a und 2b ein Blockdiagramm der wesentlichen Elemente der erfindungsgemäßen Vorrichtung, Figur 3 eine detaillierte Darstellung der wesentlichen Elemente, Figur 4 eine weitere Ausführungsform der detaillierten Darstellung, Figur 5 verschiedene über Zeit aufgetragene Signale und Figur 6 die Ausgestaltung eines Geberrades zur Erfassung der Stellung einer Welle,.

### Beschreibung der Ausführungsbeispiele

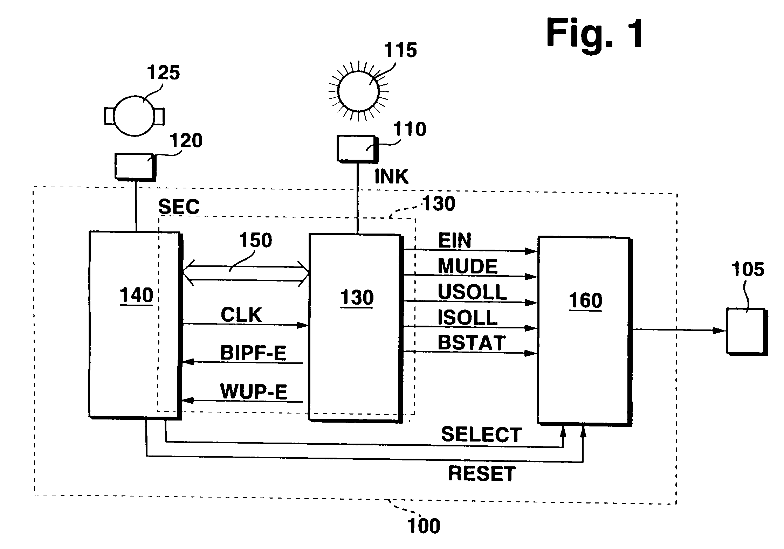

In Figur 1 ist die erfindungsgemäße Vorrichtung am Beispiel der Steuerung der Kraftstoffzumessung bei einer Dieseleinspritzpumpe mittels wenigstens eines Magnetventils dargestellt.

Ein Magnetventil 105 wird von einer Steuereinheit 100 mit Ansteuersignalen beaufschlagt. Die Steuereinheit verarbeitet Signale eines ersten Sensors 110 und eines zweiten Sensors 120. Der erste Sensor 110 tastet die Markierungen, die auf einem Inkrementgeberrad 115 angeordnet sind, ab. Das Inkrementgeberrad ist vorzugsweise auf der Kurbelwelle angeordnet. Der zweite Sensor 120 tastet die Markierungen eines Segmentgeberrads 125 ab, das vorzugsweise auf der Nockenwelle angeordnet ist und liefert ein Signal SEG. Die erfindungsgemäße Vorgehensweise ist nicht auf diese Geberanordnung beschränkt, so kann sowohl das Inkrementgeberrad als auch das Segmentgeberrad auf der Nockenwelle und/oder der Kurbelwelle angeordnet sein.

Der erste Sensor 110 stellt ein Signal INK zur Verfügung. Jede Markierung auf dem Inkrementgeberrad 115 bewirkt eine positive und eine negative Flanke des Signals INK. Der Abstand zweier gleichwertiger Flanken beträgt bei diesem Ausführungsbeispiel 6 Grad Kurbelwelle. Die Inkremente treten mit konstantem Winkelabstand auf. Zwei gleichwertige Flanken definieren ein Inkrement.

Desweiteren ist wenigstens eine Bezugsmarke vorgesehen, diese ist durch eine Lücke definiert, das heißt eine oder mehrere Markierungen auf dem Inkrementrad 115 und damit eine oder mehrere Flanken des Signals INK fehlen. Vorzugsweise fehlen zwei Flanken des Signals INK. Bei der beschriebenen Ausführungsform ist das Inkrementrad auf der Kurbelwelle angeordnet. Es sind 58 Markierungen im Abstand von 6 Grad vorgesehen. Die Zahl 58 ergibt sich durch Auslassen von zwei Markierungen. Dabei entspricht die Lückenzahl der halben Zylinderzahl der Brennkraftmaschine.

Das vorzugsweise auf der Nockenwelle angeordnete Segmentrad umfaßt vorzugsweise eine der Zylinderzahl entsprechende Anzahl von Markierungen. Eine Doppelmarkierung dient der Zuordnung des Kurbelwellenwinkels zum Zylinder 1.

Die Steuereinheit 110 umfaßt im wesentlichen ein sogenanntes Gate-Array 130, einen Controller 140 sowie eine Endstufen Ansteuerung 160 und eine nicht dargestellte Endstufe. Der Controller 140 und das Gate-Array 130 sind über verschiedene Leitungen sowie einen sogenannten Bus 150 miteinander verbunden und tauschen über diese Leitungen bzw. über den Bus 150 verschiedene Signale miteinander aus. Das Gate-Array 130 und die Endstufe 160 sind ebenfalls über verschiedene Leitungen miteinander verbunden. Desweiteren steht der Controller über vorzugsweise zwei Leitungen mit der Endstufe 160 in Verbindung. Die Endstufe 160 beaufschlagt das Magnetventil 105 mit Strom.

Vorzugsweise ist die Anordnung so realisiert, daß der erste Sensor 110, der das Inkrementgeberrad 115 abtastet, lediglich mit dem Gate-Array 130 und der zweite Sensor 120, der das Segmentrad 125 abtastet, mit dem Controller 140 in Verbindung steht. Diese Vorgehensweise bietet den Vorteil, daß das Inkrementsignal ausschließlich vom Gate-Array 130 verarbeitet wird. Der Controller 140 wird also nicht mit hochfrequenten Inkrementinterrupts belastet, die durch die Flanken des Signals INK ausgelöst werden.

Das Signal INK des ersten Sensors 110 liefert der Steuereinheit die Information zum aktuellen Kurbelwellenwinkel, indem die Inkrementflanken abgezählt werden. Die aktuelle Inkrementperiodendauer wird im Gate-Array von einem Timer erfaßt, der mit jeder positiven Flanke des Signals INK den momentanen Timerstand in ein Register schreibt und anschließend zurückgesetzt wird. Der Controller 41 kann den Wert dieses Registers, der der momentanen Drehzahl der Kurbelwelle entspricht, aus dem Gate-Array über den Bus auslesen und daraus die Momentandrehzahl ermitteln.

Teile des Controllers 140 und des Gate-Arrays, die einen gemeinsamen Funktionsblock bilden, sind gestrichelt markiert und werden als IWZ bezeichnet. Hierbei handelt es sich um ein sogenanntes inkrementales Winkel-Zeit-System.

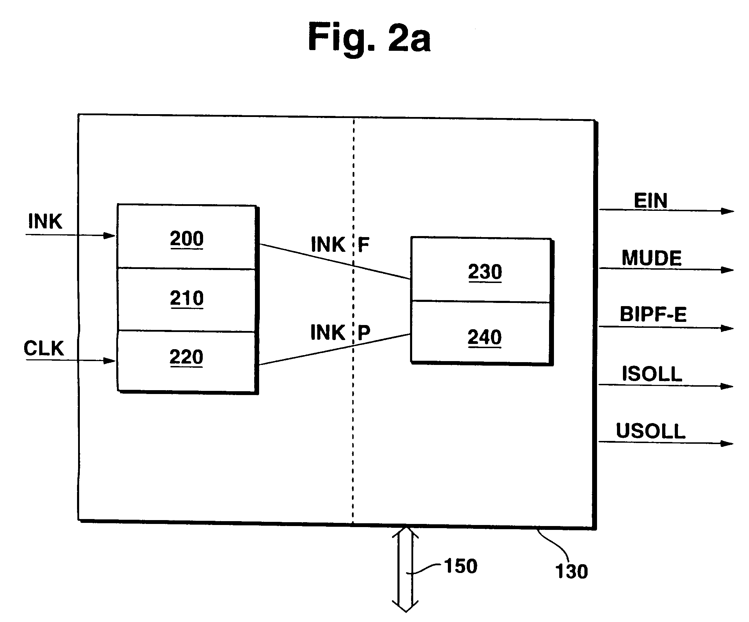

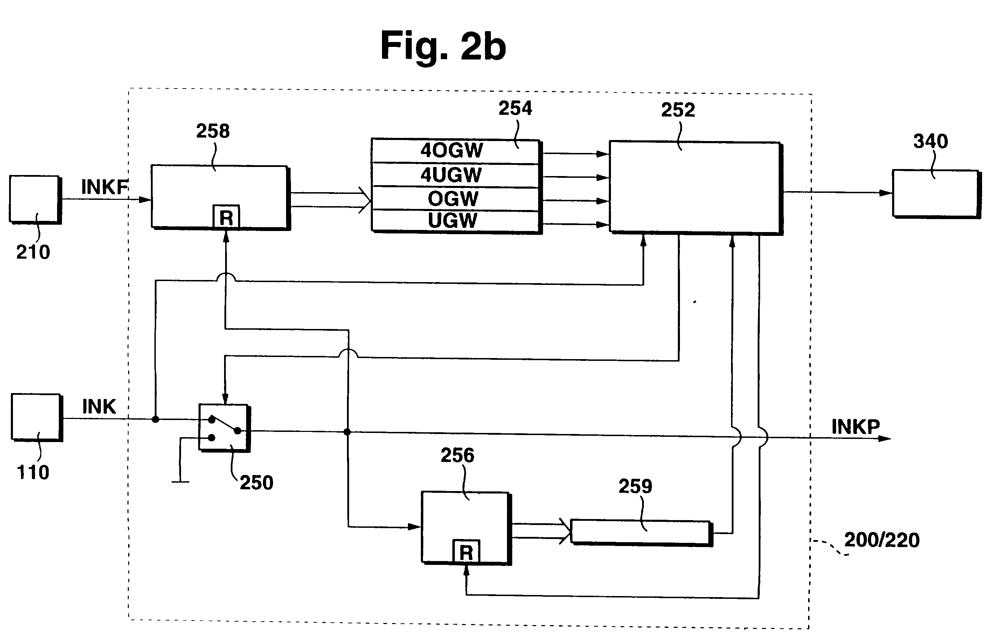

In Figur 2 sind die wesentlichen Elemente des Gate-Array 130 detaillierter dargestellt. Das Gate-Array umfaßt im wesentlichen die in Figur 2 dargestellten Funktionsblöcke. Die linke Hälfte der Funktionsblöcke kann als Signalverarbeitung bezeichnet werden. Ihr wird vorzugsweise das Signal INK des ersten Sensors 110 sowie das Signal CLK mit einem festen zeitlichen Raster zugeführt.

Die Signalverarbeitung umfaßt eine dynamische Plausibilitätsüberprüfung 200, eine Frequenzvervielfachung 210 und eine logische Plausibilitätsabfrage 220. Diese Blöcke stellen ein Signal INKF und ein Signal INKP bereit, das von der Ablaufsteuerung, die aus den Blöcken Winkeluhr 230 und Ablaufsteuerung 240 besteht, verarbeitet wird.

Die Ablaufsteuerung stellt die Signale EIN, MODE, BIPF-E, ISOLL und USOLL zur Verfügung.

Die Aufgabenteilung zwischen dem Controller 140 und dem Gate-Array 130 ist wie folgt. Der Controller 140 initialisiert das Gate-Array 130. Desweiteren verarbeitet der Controller 140 die Ausgangssignale SEG des zweiten Sensors 120, der das Segmentgeberrad 125 abtastet. Ausgehend von weiteren Sensorsignalen, die nicht dargestellt sind, stellt der Controller 140 Sollwerte für den Förderbeginn FB und das Förderende FE als Winkelgröße für die Haupteinspritzung und gegebenenfalls für die Voreinspritzung eines jeden Zylinders bereit.

Für jede Zumessung in einen Zylinder werden mehrere Zeitabschnitte unterschieden, dies sind eine Anzugstromphase, eine Spannungsregelungsphase, die auch als Freilaufphase realisiert sein kann und auch als BIP-Fenster bezeichnet wird, eine Haltestromphase und eine Schnellöschung. Der Controller 140 gibt die Zeitdauern t_{az}, t_{BIP} und tₗₛ der einzelnen Zeitabschnitte vor. Desweiteren führt der Controller 140 die BIP-Erfassung durch. Auch die Synchronisation erfolgt durch den Controller 140. Die obigen Signale werden vorzugsweise über den Bus 150 zum Gate-Array 130 übertragen.

Desweiteren wird ein Signal CLK mit fester Frequenz, das vorzugsweise von einem Quarz bereitgestellt wird vom Controller 140 zum Gate-Array 130 übertragen. Ein Signal SELECT wird vom Controller 140 zur Endstufe 160 übermittelt. Dieses Signal enthält vorzugsweise eine 3-Bit-Information und wählt eines aus acht möglichen Magnetventilen 105 aus. Dieses Signal stellt die Zuordnung zwischen dem Ansteuersignal und dem entsprechenden Zylinder her. Ferner kann ein sog. Reset-Signal vom Controller an die Endstufenansteuerung 160 übermittelt werden.

Das Gate-Array 130 führt folgende Aufgaben durch. Es überprüft das Signal INK auf seine Plausibilität. Desweiteren wird die Winkelauflösung mittels einer sog. Impulsvervielfachung erhöht. Dies bedeutet, daß der Abstand zwischen zwei Inkrementen in eine Vielzahl von Teilimpulsen aufgeteilt wird. Desweiteren umfaßt das Gate-Array 130 eine sog. Winkeluhr. Das Gate-Array steuert die Einspritzsequenzen und stoppt die Einspritzung bei einem Synchronisationsverlust.

Das Gate-Array 130 übermittelt hierzu verschiedene Signale an die Endstufe 160 und den Controller 140.

Der Pegel eines EIN-Signals und eines MODE-Signals bestimmen den Zustand des Magnetventils. Diese Signale werden von der Winkeluhr 230 und der Ablaufsteuerung 240 ausgelöst.

Das Signal ISOLL ist ein analoger Sollwert für die Stromregelung der Magnetventile, die in der Endstufe 160 implementiert ist. Erzeugt wird dieser Wert von einem DA-Wandler. Benötigt werden zwei Sollwerte, der der Haltestromregelung und der der Anzugstromregelung. Zwischen den beiden Werten wird durch eine Logik während des BIP-Fensters umgeschaltet. Die Sollwerte werden bei der Initialisierung des Systems in die entsprechenden Register des Gate-Array eingetragen.

Bei dem Signal USOLL handelt es sich um den Sollwert für die Magnetventilspannungsregelung während des BIP-Fensters. Er wird ebenfalls mittels eines DA-Wandlers gebildet. Der Wert für USOLL, der dem Wert der am Magnetventil abfallenden Spannung entspricht, wird ebenfalls bei der Initialisierung in ein Gate-Array-Register eingetragen. Bei einem Vorgabewert von Null erfolgt die BIP-Suche im Freilauf.

Bei dem Signal BSTAT handelt es sich um ein Statussignal für die Endstufe 160. Dieses Signal unterscheidet zwischen einer BIP-Erfassung im Freilauf und einer Spannungsregelung durch den Wert, der bei der Initialisierung des Gate-Arrays für die Erzeugung des Werts USOLL eingetragen wurde. Ist dieser Wert gleich Null, so wird während des BIP-Fensters zur BIP-Erfassung in den Freilauf geschaltet. Ist das Signal BSTAT ungleich Null, so wird die Magnetventilspannung im BIP-Fenster auf den eingetragenen Sollwert USOLL geregelt..

Das Signal BIPF-E erzeugt nach dem Beginn des BIP-Fensters bzw. nach dem Ende der Anzugsstromregelung mit der positiven Flanke des Signals einen Interrupt am Controller 140. Hiermit wird eine Interrupt-Routine ausgelöst, welche eine AD-Wandlerroutine zur Abtastung des Magnetventilstromverlaufs während des BIP-Fensters beinhaltet. Ausgehend von dem Verlauf des Stroms wird der Schaltzeitpunkt BIP des Magnetventils ermittel. Am Ende des BIP-Fensters wird durch die fallende Flanke des Signals wiederum derselbe Interrupt erzeugt, der die Wandlung beendet. Zu Beginn der Einspritzung wird die steigende Flanke freigegeben. Das bedeutet nur eine steigende Flanke löst ein Interrupt aus. Während der Abarbeitung der AD-Wandlerroutine wird dann die fallende Flanke freigegeben. So erkennt der Controller, welche Flanke einen Interrupt-Routine ausgelöst hat.

In Figur 2b ist die dynamische Plausibilitätsabfrage 200 und die logische Plausibilität 220 detaillierter dargestellt. Die Ausgangssignale INK des ersten Sensors 110 gelangen über ein Schaltmittel 250 zu dem Zähl-Eingang eines Acht-Bit-Zählers 256 und zu dem Reset-Eingang eines Elf-Bit-Zählers 258. Desweiteren bilden Sie das Ausgangssignal INKP der Plausibilitätsüberprüfungen 200 und 220. Das Signal INK gelangt unmittelbar zu einer Plausibilitätsüberprüfung 252, die wiederum das Gate-Array-Status-Register 340 mit einem Wert beaufschlagt.

Am Zähl-Eingang des Elf-Bit-Zählers 258 liegt das Ausgangssignal INKF der Frequenzvervielfachung 210 an. Der Zählerstand des Elf-Bit-Zählers 258 gelangt zu den Compare-Registern 254, die wiederum die Plausibilitätsprüfung 252 mit Signalen beaufschlagen. Die Plausibilitätsprüfung 252 beaufschlagt das Schaltmittel 250 mit einem Steuersignal und den Rest-Eingang des Acht-Bit-Zählers 256 mit einem Resetsignal.

Diese Einrichtung arbeitet nun wie folgt:

Das Signal INK wird nur dann als plausibel eingestuft und als Signal INKP weitergeleitet, wenn es in bestimmten Abständen zum vorhergehenden Signal auftritt. Diese Bewertung wird durch ein Gültigkeits-Fenster realisiert. Dieses Gültigkeits-Fenster wird mit einer Zähler-Compare-Struktur 258 254 verwirklicht, die mit dem Signal INKF getaktet wird. Die Frequenzvervielfachung 210 erzeugt pro Inkrement 256 Pulse INKF, die auch als Teilinkremente bezeichnet werden können. Bewegt sich die Brennkraftmaschine mit konstanter Drehzahl, so würde das nächste Inkrementsignal INK nach 256 Impulsen des Signals INKF auftreten. Berücksichtigt man Beschleunigung und Verzögerung, so kann der nächste Impuls schon nach weniger bzw. erst nach mehr als 256 Impulsen auftreten.

Abhängig von den maximal möglichen Werten für Beschleunigung und Verzögerung wird ein Winkelfenster, auch als ültigkeitsfenster bezeichnet, geöffnet, in dem eine Impuls des Signals INK als plausibel akzeptiert wird. Signale zwischen einem unteren Grenzwert UGW und einem oberen Grenzwert OGW werden als gültig akzeptiert. Mit dem Elf-Bit-Zähler 258 werden die Impulse des Signals INKF gezählt und mit den Werten UGW und OGW in den Compare-Registern 254 verglichen. Ist der Zählerstand des Elf-Bit-Zähler 258 kleiner als der untere Grenzwert UGW oder größer als der obere Grenzwert OGW, so steuert die Plausibilitätsabfrage 252 das Schaltmittel 250 so an, daß das Signal INK gesperrt wird. Ist der Zählerstand des Elf-Bit-Zähler 258 größer als der untere Grenzwert UGW und kleiner als der obere Grenzwert OGW, so steuert die Plausibilitätsabfrage 252 das Schaltmittel 250 so an, daß das Signal INK als Signal INKP weiter geleitet wird.

Nur wenn der Zählerstand des Elf-Bit-Zählers 258 Werte innerhalb des Gültigkeitsfensters, das durch die Werte UGW und OGW definiert ist, annimmt, ist der Schalter 250 in seinem eingezeichneten Stellung. In diesem Fall werden die Signale INF als plausible Signale INKP akzeptiert. Nach Erkennen eines plausiblen Signals INK wird der Schalter von der Plausibilitätsprüfung 252 in seinen geöffneten Zustand gebracht und der Zähler 258 auf Null zurückgesetzt. Gleichzeitig wird der Acht-Bit-Zähler 256 um den Wert 1 erhöht.

Tritt innerhalb des Gültigkeitsfensters zwischen UGW und OGW kein gültiges INK-Signal auf, so wird dies durch ein Plausibilitätsbit im Gate-Array-Status-Register 340 angezeigt und es werden entsprechende Maßnahmen eingeleitet. Dies bedeutet, daß beispielsweise die Einspritzung abgebrochen wird, um Beschädigung am Motor und hohe Schadstoffemissionen zu vermeiden.

Die logische Plausibilität 210 trifft eine Aussage über die plausible Anzahl der gezählten Signale INKP zwischen zwei Lücken. Durch die Form des Inkrementrades ist die Anzahl von Lücke zu Lücke festgelegt. Diese Zahl ist im Compare-Register 259 abgelegt. Als plausibel erkannte Signale INKP gelangen zum Zähleingang des Zählers 256. Diese Signale werden mit dem Acht-Bit-Zähler der Zähler-Compare-Struktur 256, 259 der logischen Plausibilität gezählt. Der Zählerstand des Acht-Bit-Zählers 256 gibt die Anzahl der detektierten INKP-Zähne an. Er wird mit dem Inhalt des Compare-Registers 259 verglichen. Im Compare-Register steht ein bei der Initialisierung vom Controller eingetragener Wert, der die Anzahl der INKP-Impulse zwischen den Lücken auf dem INK-Signal angibt. Ist diese Zahl von Impulsen erkannt worden, so wird als nächstes eine Lücke erwartet. In diesem Fall werden für die dynamische Plausibilität ein anderes Gültigkeitsfenster, mit den Werten 40GW und 4UGW verwendet.

Der erste Impuls wird hier innerhalb des Gültigkeitsfensters für den Impuls nach der Lücke erwartet. Tritt ein Impuls bereits innerhalb des Gültigkeitsfensters der Inkremente auf, so führt dies zu einem Plausibilitätsfehler und zum Abbruch der Einspritzung.

Basierend auf der Inkrementperiodendauer des letzten Inkrements vor der Lücke läuft das Signal INKF über die Dauer der Lücke und des ersten Inkrements nach der Lücke weiter. Das erste INK-Signal wird zur Korrektur des Fehlers des Gebers nach der Lücke ausgeblendet. Bei einer Lücke von zwei Impulsen wird das erste Signal INK, das verarbeitet ist, nach der Dauer von vier Inkrementen auftreten. Dabei handelt es sich um den zweiten Impuls des Signals INK nach der Lücke. Um diesen Impuls auf Plausibilität zu testen, wird ein zweites Gültigkeitsfenster mit der vierfachen Größe eines Inkrementfensters verwendet. Dieses Fenster ist durch zwei Compare-Register 4UGW und 40GW realisiert. Die Grenzwerte sind entsprechend der vierfachen Zeit bis zum nächsten Impuls vergrößert. Erkennt die Plausibilitätserkennnung 252 mittels dem Compare-Register 259 eine Lücke, so schaltet die Plausibilität 252 zwischen den Wertepaaren für das Inkrementfenster (OGW, UGW) und das Lückenfenster (40GW, 4UGW) um.

Die dynamische Plausibilitätsabfrage 200 beurteilt die Zeitabstände der Impulse des Signals INK hinsichtlich der Dynamik des Motors. Durch dessen Drehmasse sind Beschleunigungen und Verzögerungen nur bis zu einer bestimmten Größe möglich. Hieraus ergibt sich für aufeinanderfolgende Periodendauer der Inkrementsignale, daß deren Quotient bestimmte Werte nicht unter- oder überschreiten darf.

Die Impulse des Signals INK werden nur dann als plausibel eingestuft, wenn sie in bestimmten Abständen zum letzten Impuls auftreten. Hierzu wird überprüft, ob innerhalb eines bestimmten Zeitbereichs ein Impuls des Signals INK auftritt. Tritt ein solcher Impuls nicht auf, so wird dies durch ein Plausibilitätsbit in einem sog Gate-Array-Status-Register angezeigt. Ist dieses Plausibilitätsbit im Gate-Array-Status-Register gesetzt, so erkennt der Controller 140 das Signal INK als vorläufig defekt an. Dies hat zur Folge, daß die Einspritzung vom Gate-Array selbständig abgebrochen wird, um Beschädigungen am Motor und hohe Schadstoffemissionen zu vermeiden.

Eine Ursache für einen Ausfall des Signals kann ein abgefallenes Kabel oder ein defekter Geber sein. Eine weitere Ursache ist darin zu sehen sein, daß Störimpulse auftreten. Treten diese Störimpulse in dem Gültigkeitsfenster auf, so wird dies nicht sofort erkannt. Wird die Frequenz der vervielfachten Inkrementsignale INK_{f} durch diese Störsignale so stark erhöht, daß der nächste Impuls des Signals INK nicht in das nächste Gültigkeitsfenster fällt, so wird die Plausibilität in der nächsten Periode verletzt. Tritt der Fall ein, daß der nächste Impuls in die folgenden Fenster passen, so wird weiter gezählt, bis der Zählerstand erreicht ist, bei dem eine Lücke erwartet wird. Da durch die zusätzlichen Impuls der Zählerstand des Zählers der logischen Plausibilität zu früh auf das Auftreten einer Lücke weist, wird die erwartete Lücke um die Zeitdauer einer Inkrementperiode zu spät auftreten, da ein normaler Zahn folgt. Der Impuls wird in das Inkrementgültigkeitsfenster fallen und damit die Plausibilität verletzen, weil hier für den Fall einer Lücke kein Inkrementimpuls auftreten darf.

Die logische Plausibilität 220 überprüft, ob die Anzahl der plausiblen Impulse INK zwischen zwei Lücken einer festgelegten Zahl entspricht. Die als plausibel erkannten Impulse des Signals INK werden als Signal INKP bezeichnet. Dies bedeutet die Signale INK des ersten Sensors (110) werden als zulässig erkannt, wenn der Wert eines Zählmittels, das die Teilinkremente zählt, innerhalb eines Gültigkeitsfensters liegt.

Der Frequenzvervielfacher 210 besteht aus einer Zähler-Teiler-Struktur. Grundlage ist das Ausmessen der Periodendauer des Signals INK. Mittels eines Zählers wird die Zeit zwischen zwei positiven Flanken des Signals INK erfaßt. Üblicherweise werden die positiven Flanken des Signals INK bzw. INKP als Impulse bezeichnet. Entsprechend können auch die negativen Flanken als Impulse betrachtet werden und entsprechend ausgewertet werden. Ausgehend von diesem Wert wird das nächste Inkrement in eine vorgegebene Anzahl von Teilinkrementen mit gleicher Dauer aufgeteilt. Bei einer stationären Motordrehzahl, d.h. einer konstanten Periodendauer des INK-Signals, erhält man am Ausgang des Frequenzvervielfachers über einer INK-Periode 256 Pulse des Signals INKF.

Die Periodendauer des INKF-Signals entspricht jeweils dem 256sten Teil der letzten ausgemessenen Inkrementperiode. Über die Lücke und das erste Inkrement nach der Lücke bleibt die Dauer des INKF-Signal unverändert, seine Periodendauer danach ist ein gemittelter Wert, gewonnen aus der Lückenperiode und der ersten INK-Periode nach der Lücke.

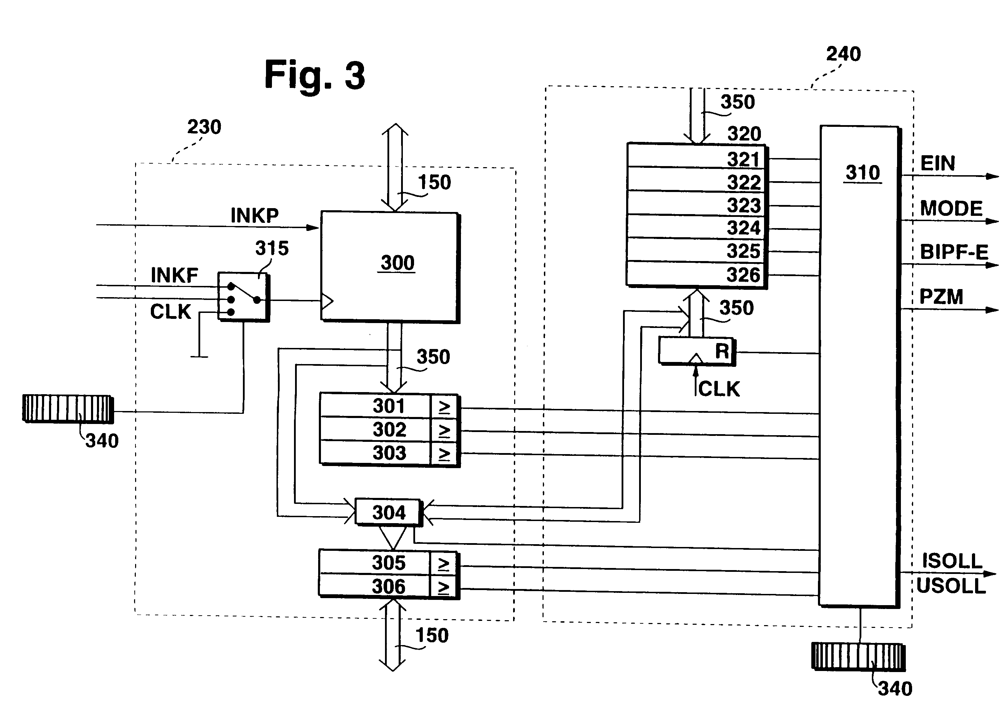

In Figur 3 ist die Winkeluhr 230 und die Ablaufsteuerung 240 detaillierter dargestellt.

Das vervielfachte Inkrementsignal INKF gelangt über ein Umschaltmittel 315 zu einem Winkelzähler 300. Am zweiten Eingang des Umschaltmittels 315 liegt das Signal CLK. Das Umschaltmittel 315 beaufschlagt den Winkelzähler 300 wahlweise mit dem Signals INKF bzw. mit dem Signal CLK. Als zweite Eingangsgröße gelangt das Signal INKF zum Winkelzähler 300. Desweiteren ist der Winkelzähler 300 mit dem Bus 150 verbunden.

Über einen Bus 350 ist der Winkelzähler 300 mit verschiedenen Compare-Registern 301, 302, 303, 305 und 306 verbunden. Die Umschalteinrichtung wird abhängig vom Ausgangssignal eines Gate-Array-Controllregisters angesteuert. Erreicht der Inhalt des Winkelzählers einen Wert, der dem Inhalt eines Compare-Registers entspricht, so gibt das entsprechende Compare-Register ein Signal ab.

Die Ablaufsteuerung 240 umfaßt im wesentlichen verschiedene Compare-Register 321, 322, 323, 324, 325 und 326. Desweiteren ist ein Zeitzähler 330 vorgesehen. Der Zeitzähler wird mit dem Signal CLK beaufschlagt. Der Zeitzähler ist über den Bus 350 mit den Registern 321 bis 326 verbunden. Die Ausgangssignale der Compare-Register 321 bis 326 sowie der Compare-Register 301, 302, 303, 305 und 306 sowie das Ausgangssignal des Zeitzählers 330 und das Ausgangssignal des Blockes 304 gelangen zu der Steuerung 310, die ferner mit dem Gate-Array-Controll-Register 340 verbunden ist. Die Steuerung 310 gibt die Signale EIN, MODE, BIPF-E, ISOLL, USOLL und WUP-E ab.

Die Ablaufsteuerung 240 erzeugt, initiiert durch die Winkeluhr 230 die Sequenz der Ansteuersignale EIN, ISOLL, USOLL und MODE für die Endstufe 160. In die einzelnen Register 301, 302, 303, 305 und 306 werden über den BUS 150 Werte vom Controller 140 eingeschrieben.

Der Wert im Compare-Register 301 gibt die Winkelstellung der Kurbelwelle an, bei dem das Magnetventil bestromt wird, um die Voreinspritzung auszulösen. Im zweiten Compare-Register 302 ist der entsprechende Wert für die Haupteinspritzung HE abgelegt. Dieser Winkelwert gibt an, bei welcher Winkelstellung der Kurbelwelle das Magnetventil zu bestromen ist.

Im Compare-Register 303 ist eine Winkelstellung abgelegt, bei der die Winkeluhr ein Interrupt-Signal WUP-E abgibt, auf das hin der Controller 140 bestimmte Rechenschritte durchführt.

Im Compare-Register 305 ist die Winkelstellung abgelegt, bei der die Ansteuerung für das Magnetventil für die Voreinspritzung enden soll. Im Compare-Register 306 ist der entsprechende Wert für die Haupteinspritzung abgelegt.

In den Compare-Registern 321 bis 326 sind Zeiten abgelegt, nach denen verschiedene Signale ausgelöst werden.

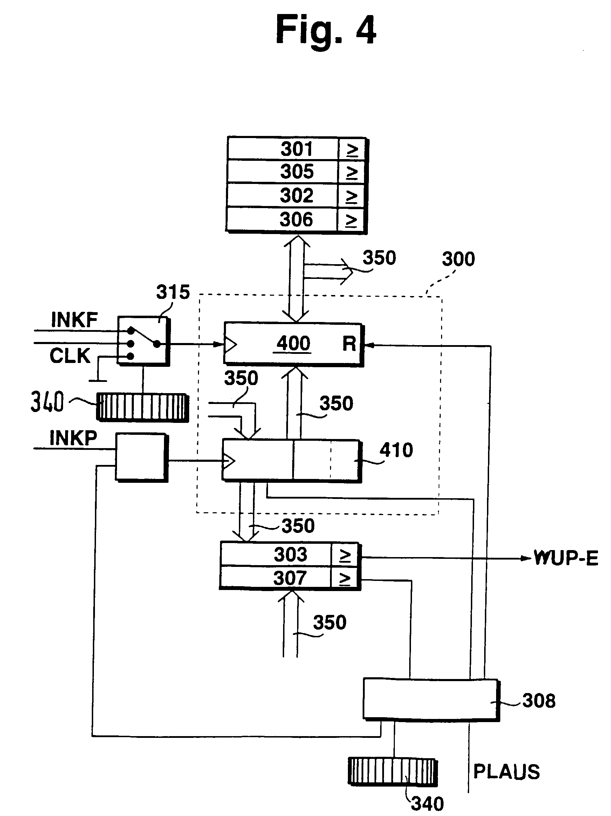

In Figur 4 ist die Winkeluhr 230 detaillierter dargestellt. Der Winkelzähler 300 ist detaillierter dargestellt. Der Winkelzähler 300 umfaßt einen 16-Bit-Zähler 400, der mit dem Ausgangssignal des Umschaltmittels 315 beaufschlagt wird. Ferner umfaßt der Winkelzähler einen weiteren Zähler 410, der mit dem Signal eines Oder-Blockes 420 beaufschlagt wird. An einem ersten Eingang des Oder-Blockes 420 liegt das Signal INKP an. Ein zweiter Eingang des Oder-Blockes 420 steht mit der Steuerung 308 in Verbindung. Die beiden Zähler stehen ferner mit einer Steuerung 308 in Verbindung. Über einen BUS stehen die Zähler 400 und 410 mit den verschieden Compare-Registern in Kontakt.

Ist im Control-Register 340 ein Wert abgelegt, der anzeigt, daß die Inkrementsignale INK nicht plausibel sind, oder daß ein anderer Fehler vorliegt, so wird der Umschalter 315 so angesteuert, daß anstelle des Signals INKF das Signal CLK verwendet wird.

Die ersten acht Bit, die auch als most significant Byte bezeichnet werden, des weiteren Zählers 410 werden jeweils um 1 erhöht, wenn ein Signal INKP auftritt. Die zweiten acht Bit des weiteren Zählers 410 nehmen ständig den Wert 0 an. Dies bedeutet, der weitere Zähler 410 zählt die als plausibel erkannten Inkrementimpulse INK. Die fehlenden Impulse in der Lücke werden von der Steuerung 308 ersetzt. Dies bedeutet in der Lücke liefert die Steuerung Impulse, die den fehlenden Flanken entsprechen.

Der Inhalt des Zählers 400 werden bei jedem Impuls des Ausgangssignals des Umschaltmittels 315 erhöht. Dies bedeutet, der Zähler 400 zählt die vervielfachten Inkrementimpulse INKF.

Bei jeder Erhöhung des weiteren Zählers 410 wird der Inhalt des weiteren Zählers 410 in den Zähler 400 eingeschrieben.

Der Zähler 400, der vorzugsweise als 16-Bit-Zähler realisiert ist, wird mit der Frequenz vervielfachten Winkelinformation INKF getaktet. Der Zählerstand des Zählers 400 entspricht der aktuellen Kurbelwellenstellung. Die ersten 8 Bit des Zählers 400 bzw des weiteren Zählers 410 geben die Anzahl der Zähne und die zweiten 8 Bit des Zählers 400 bzw des weiteren Zählers 410 geben die Anzahl der Teilinkremente INKF an. Die zweiten 8 Bit durchlaufen dabei die Zählerstände zwischen o und 256. Bei jedem als plausibel erkannten Inkrement INKP werden die zweiten 8Bit zu Null gesetzt.

Bei konstanter Drehzahl und korrekter Frequenzvervielfachung müßte bei jeder Inkrementflanke ein Vielfaches von 256 im Winkelzähler 400 stehen. Um Abweichungen der Winkeluhr vom Kurbelwellenwinkel durch Beschleunigung oder durch Verzögerung entgegen zu wirken, wird der Winkeluhrstand mit den Flanken des Signals INKP korrigiert. Hierzu wird der Inhalt des Zählers 410 bei jeder Flanke des Signals INKP in den Zähler 400 übernommen, dadurch werden die zweiten 8 Bit des Winkelzählers 400 zu Null gesetzt.

Desweiteren wird der Winkelzähler 400 nach 720 Grad Kurbelwelle auf Null gesetzt. Hierzu dient das Compare-Register 307. Erreicht der Inhalt des Winkelzählers, insbesondere die ersten acht Bit des Zählers 410, einen Wert, der einer Winkelstellung von 720 Grad entspricht, so wird der Winkelzähler 400 über die Steuerung 308 auf Null zurückgesetzt.

Im Fehlerfall schaltet die Steuerung 308 zwischen einer Winkelzumessung, das heißt einer Zählung der Inkremente INKF, oder einer Zeitzumessung, das heißt einer Zählung der Signale CLK um. Dies erfolgt dadurch, daß ein Bit des Control-Registers 340 auf einen bestimmten Wert gesetzt wird. Abhängig von diesem Wert nimmt das Schaltmittel 315 eine entsprechende Position ein. Ferner generiert die Steuerung 308 die Wake-Up-Interrupts.

Erfindungsgemäß werden Größer-Gleich-Compare-Register verwendet. Da der Takt für die Winkeluhr nur alle sechs Grad Kurbelwelle auf der Basis der letzten Inkrementperiode nachjustiert wird, kann die Winkeluhr im Falle einer Beschleunigung zu langsam, bei Verzögerung zu schnell getaktet sein. Bei einer Beschleunigung kann die nächste Zahnflanke bereits erreicht sein, bevor die Winkeluhr den entsprechenden Stand aufweist. Probleme können bei einem Vergleich auf Gleichheit entstehen, wenn durch die Sollwertkorrektur der gewünschte Winkeluhrstand übersprungen wird. Wird im Inkrement von Null bis 6 Grad beschleunigt, so wird bei großer Beschleunigung der Wert 250 beispielsweise nicht erreicht, da die Inkrementflanke bereits beispielsweise beim Winkeluhrstand 240 auftritt und dieser Wert auf den Wert 256 korrigiert wird. Wäre 250 der Einspritzwinkel, so käme hier kein Signal zustande. Durch die Verwendung von Größer-Gleich-Compare-Registern kann diese Unzulänglichkeit vermieden werden.

Es muß verhindert werden, daß die Compare-Register für die Winkel MVₒₙ und MV_{off} mehr als einmal eine Ansteuerung der Magnetventile veranlassen. Dies könnte durch mehrfaches Durchlaufen der eingetragenen Winkel geschehen. Hierzu sind die Compare-Register als sog. Single-Shot-Register aufgebaut. Die Comparelogik wird beim Überschreiben mit den Winkeln aktiviert und verliert nach einem ausgelösten Ereignis die Fähigkeit, Signale zu erzeugen. Auf diese Weise wird verhindert, daß bei entsprechendem Kurbelwellenwinkel weitere Einspritzsignale erzeugt werden. Nach einem Reset und/oder nach einem Verlust der Synchronisation ist die Comparelogik inaktiv.

Die Sollwinkel MVON und MVOFF für die Einspritzung werden in die Compare-Register 301, 302, 304 und 306 vom Controller 140 eingetragen. Stimmen der Wert im Compare-Register und der Wert des Zählers 300 überein oder ist der Zählerstand im Winkelzähler 300 bereits größer als der Wert im Compare-Register, so erzeugt das jeweilige Compare-Register ein Signal für die Ablaufsteuerung 310.

Der Zeitzähler 330 der Ablaufsteuerung 240 ist an die Signale des Winkelzählers 300 und dessen Compare-Register angebunden. Er wird von den Compare-Registersignalen der Compare-Register 301, 302, 305 und 306 von Vor- und Haupteinspritzung gestartet.

Bei Erreichen des Winkels der im Compare-Register 301 abgelegt ist, startet der Zeitzähler 330 bei Null und die Zustände für Anzugstromregelung, BIP-Fenster und Haltestromregelung werden durchlaufen. Bei Erreichen des Zählerstandes, die in den Compare-Registern 305 bzw. 306 abgelegt sind, wird der Zeitzähler 330 erneut auf Null gesetzt und durchläuft den Zustand Schnellöschung. Nach Durchlaufen des Zustands Schnellöschung wird der Zeitzähler 330 auf Null gehalten.

Ausgehend von den Ausgangssignalen der verschiedenen Compare-Register in der Winkeluhr und der Ablaufsteuerung erzeugt die Ablaufsteuerung Sequenz von EIN- und MODE-Signalen. Die Codierung der Pegel von den Signalen EIN und MODE zur Erzeugung der verschiedenen Magnetventilzustände wird von den Compare-Registern und einer nachgeschalteten Logik in der Steuerung 310 verwirklicht.

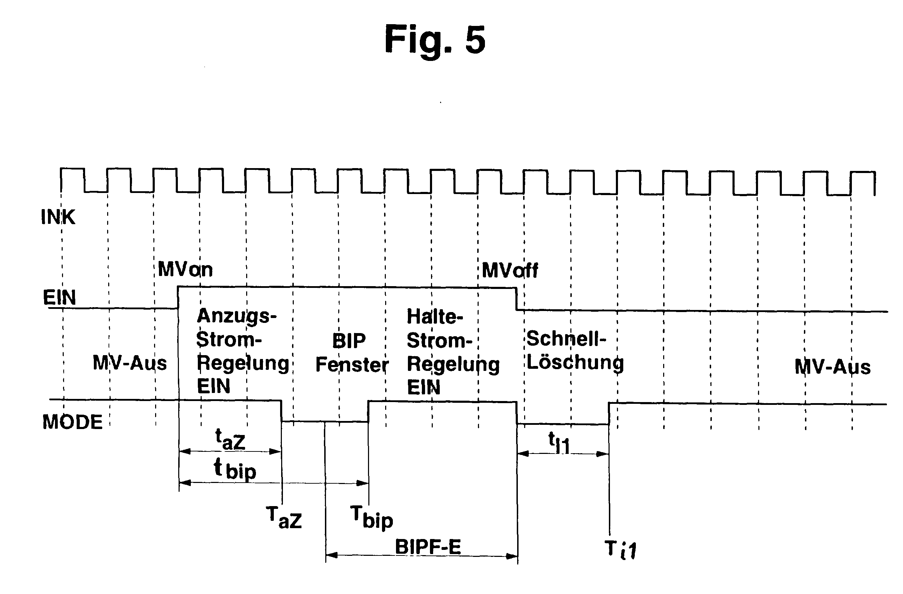

In Figur 5 sind verschiedene Signale über der Zeit aufgetragen. In der ersten Zeile sind die verschiedenen Inkremente bzw. das Signal INK bzw. INKP aufgetreten. Die Inkrement sind durch senkrechte gepunktete Linien gekennzeichnet.

In der zweiten Zeile ist das Signal EIN aufgetragen. Dieses Signal weist einen niederen und einen erhöhten Pegel auf. So lange dieses Signal einen niederen Pegel aufweist, wird das Magnetventil nicht bestromt. Ab dem Zeitpunkt MVₒₙ steigt der Pegel des Signals an und das Magnetventil wird bestromt. Zum Zeitpunkt MV_{off} wird die Bestromung zurückgenommen.

In der dritten Zeile ist das Signal MODE aufgetragen. Dieses Signal weist ebenfalls einen niederen und einen erhöhten Pegel auf.

Die Winkelstellung der Kubelwelle, bei der die positive Flanke MVₒₙ des Signals EIN eintritt, ist für die Haupteinspritzung im Compare-Register 302 und für die Voreinspritzung im Compare-Register 301 abgelegt. Der Winkelwert für das Signal MV_{off} ist für die Voreinspritzung im Copare-Register 305 und für die Haupteinspritzung im Compare-Register 306 abgelegt. Sobald der Inhalt des Zählers 300 den im Compare-Register 301, 302, 305 und 306 abgelegten Wert übersteigt, leiten die Compare-Register ein Signal an die Steuerung weiter. Die Steuerung 310 gibt dann ein entsprechendes Signal EIN mit entsprechendem Pegel aus.

In der dritten Zeile ist das Signal MODE dargestellt. Dieses Signal nimmt ebenfalls zwei Werte an. Ab dem Zeitpunkt MVₒₙ wird der Zeitzähler 330 auf Null gesetzt. Bei jedem Impuls des Signals CLK wird der Inhalt des Zeitzählers erhöht.

Erreicht der Zeitzähler den im Compare-Register 323 für die Haupteinspritzung und den im Compare-Register 326 für die Voreinspritzung abgelegten Werte für die Zeit t_{az} bzw. die Zeit t_{bip}, so ändert sich der Pegel des MODE-Signals.

Solange das Signal EIN seinen hohen Wert und das Signal MODE ebenfalls seinen hohen Wert, dies ist während der Zeitdauer t_{az} der Fall, wird der Strom durch das Magnetventil auf seinen Anzugstromwert geregelt. Hierzu wird ein entsprechender Wert als Signal ISOLL von der Ablaufsteuerung 310 vorgegeben.

Nach Ablauf der Zeit t_{az} zum Zeitpunkt T_{az} fällt das Signal MODE auf seinen niederen Signalpegel ab. Dies erfolgt so lange, bis nach Ablauf der Zeitdauer t_{BIP} zum Zeitpunkt T_{BIP} das Signal wieder auf seinen höheren Wert ansteigt. Der Wert für die Zeitdauer t_{BIP} ist für die Haupteinspritzung im Compare-Register 322 und für die Voreinspritzung im Compare-Register 325 abgelegt. Sobald der Zeitzähler den entsprechenden Zählerstand aufweist wird ein entsprechender Pegel des MODE-Signals durch die Steuerung 310 ausgelöst.

Die Zeitspanne zwischen den Zeitpunkten T_{az} und T_{az}wird üblicherweise als BIP-Fenster oder als Freilaufphase bezeichnet. Innerhalb dieses Fensters liegt der Schließ-Zeitpunkt des Magnetventils, der zum Zeitpunkt BIP auftritt. Dieses BIP-Fenster wird durch ein hohen Signalpegel des Signals EIN und durch ein niederen Pegel des Signals MODE definiert. In dieser Zeitspanne wird die Spannung am Magnetventil auf einen Wert USOLL geregelt.

Ausgehend von dem Zeitpunkt T_{BIP} bei der vorherigen Ansteuerung des Magnetventils berechnet der Controller 140 den Winkelwert für das Signal MV_{off.} Dieser Wert wird im entsprechenden Compare-Register (305, 306) abgelegt. Erreicht der Winkelzähler den entsprechenden Zählerstand wird ein Signal von der Winkeluhr an die Steuerung 310 übermittelt und das Signal EIN nimmt seinen niederen Pegel an.

Der Zeitraum zwischen dem Zeitpunkt T_{BIP} und dem Zeitpunkt MV_{off} wird als Haltestromphase bezeichnet. Diese Phase ist dadurch definiert, daß das Signal EIN und das Signal MODE ihren hohen Pegel annehmen.

Gleichzeitig mit der Auslösung des Signals MV_{off} wird der Zeitzähler 330 zurückgesetzt und die Zeit tₗₛ.startet. Diese Zeit tₗₛ ist im Compare-Register 321 abgelegt und gibt die Zeit an, während der die Schnellöschung des Magnetventils aktiv ist. Während dieser Zeit ist das Signal MODE auf seinem niederen Pegel, dies zeigt in Verbindung mit einem niederen Pegel des Signals EIN an, daß die Schnelllöschung aktiv ist.

Nach Ablauf der Zeitdauer tₗₛ zum Zeitpunkt Tₗₛ nimmt das Signal MODE seinen hohen Pegel und das Signal EIN seinen niederen Pegel an. Durch dies Signalkombination wird ein Zustand definiert, der außerhalb einer Zumessung vorliegt.

Diese Ausführungsform bietet auch die Möglichkeit, neue Hochdruckpumpen anzusteuern, welche mit geregeltem, konstantem Einspritzdruck über die Dauer der Einspritzung arbeiten. Solche Systeme werden üblicherweise als Common-Rail-Systeme bezeichnet. Da hier die Einspritzmenge proportional zur Einspritzdauer ist, wird das Signal MVₒₙ von der Winkeluhr abgeleitet, während das Signal MV_{off} eine programmierbare Zeit nach der Flanke MVₒₙ bzw. nach dem Signal BIP erzeugt wird. Dieses Signal wird vom Zeitzähler 330 bereitgestellt.

Ähnlich ist die Struktur der Ablaufsteuerung der Einspritzung konzipiert. Nachdem die Schnellöschung beendet wurde, wird der Zeitzähler 330 auf Null gesetzt und bleibt bis zum nächsten Signal Mvₒₙ resetiert. Nach einem Power-On-Reset bleibt der Zeitzähler 330 auf Null, bis die Winkel MVₒₙ oder MV_{off} erreicht werden.

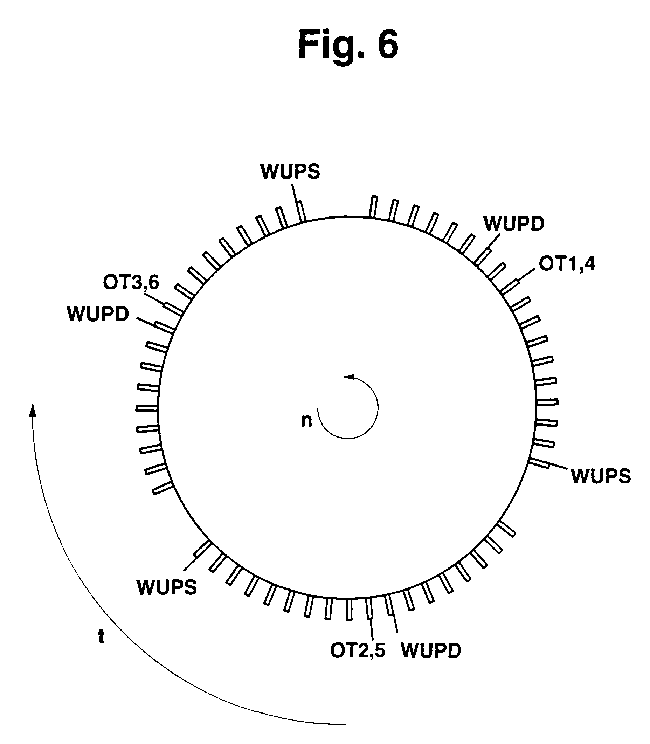

In Figur 6 ist das Inkrementrad am Beispiel für eine 6-Zylinder-Brennkraftmaschine aufgetragen. Die oberen Totpunkte der einzelnen Zylinder sind jeweils mit OT bezeichnet. Da sich die Kurbelwelle bei einer Motorumdrehung zweimal dreht, fallen die oberen Totpunkte des ersten und vierten Zylinders, des zweiten und fünften und des dritten und sechsten Zylinders zusammen. Die jeweiligen oberen Totpunkte sind mit OT 1,4, OT 2, 5 und OT 3, 6 bezeichnet.

Die statischen Wake-Up-Interrupts sind mit WUP-S und die dynamischen Wake-Up-Interrupts sind mit WUP-D bezeichnet. Sie liegen jeweils eine entsprechende Anzahl von Inkrement vor dem oberen Totpunkt des jeweiligen Zylinders.

Zum Eintragen der Sollwerte in die Compare-Register 301, 302, 305 und 306 sendet die Winkeluhr 230 bei einem wählbaren Inkrement ein Interrupt-Signal an den Controller 140. Bei Auftreten dieses Interrupt-Signals WUP-E beginnt der Controller die Berechnung der Winkelwerte MVₒₙ, MV_{off} zur Steuerung der Einspritzung. Nach der Berechnung werden diese Winkelwerte in die Compare-Register 303 der Winkeluhr eingetragen. Sobald der Winkelzähler den im Compare-Register 303 abgelegten Wert erreicht wird ein Interrupt-Signal WUP-E an den Controller 140 gegeben.

Bei den Interrupts, mit denen die Winkeluhr 230 die Berechnung der verschiedenen Winkelwerte auslöst, werden zwei verschiedene Arten unterschieden. So wird zwischen einem statischen Interrupt WUP-S und einem dynamischen Interrupt WUP-D unterschieden. Diese Signale dienen dem Controller 140 zur Winkelsynchronisation. Das Wake-Up-Signal entspricht einem Interrupt, der den Controller bei Erreichen eines bestimmten Inkrements aktiviert. Der Controller 140 errechnet dieses Inkrement zuvor und schreibt dessen Wert in das Gate-Array in das Compare-Register 305. Vorteilhaft bei dieser Aktivierung des Controllers durch das Gate-Array ist, daß der Controller von überflüssigen Winkelinformationen befreit ist und nur bei bestimmten Kurbelwellenstellungen in Aktion tritt.

Das statische Wake-Up-Signal WUP-S wird mit konstantem Winkelabstand vor dem jeweiligen oberen Totpunkt eines jeden Zylinders erzeugt. Aus dem Abstand zweier Wake-Up-Signale wird die mittlere Drehzahl des letzten Zylindersegments ermittelt. Diese Drehzahl geht mit dem Mengenwunsch in die Kennfeldberechnung der Sollwinkel für Förderbeginn und -ende ein. Beim Förderbeginn muß die Magnetventilverzugszeit mit eingerechnet werden, weil die Pumpe erst nach dieser Zeit mit der Kraftstofförderung beginnt. Diese BIP-Zeit wird mit der aktuellen gemittelten Drehzahl in einen Winkel umgerechnet. Damit wird der Förderbeginnwinkel korrigiert. Der Förderendewinkel bleibt unkorrigiert. Resultat sind die beiden Winkel MVₒₙ und MV_{off}, die für Beginn und Ende der Magnetventilbestromung stehen.

Das statische Wake-Up-Signal WUP-S stellt den Beginn eines Zylindersegments dar. Hierdurch kann sich der Winkelkorrekturwert für die BIP-Zeit über die Drehzahländerung innerhalb des Segments des aktuellen Zylinders ändern. Aus diesem Grund wird die Berechnung des BIP-Winkels so dicht wie möglich an den tatsächlichen MVₒₙ-Winkel herangeführt.

Hierfür wird ein dynamischer Wake-Up-Interrupt WUP-D generiert. Der Winkel, bei dem er erzeugt wird, wird mit Hilfe des Förderbeginnsoll-Winkels berechnet, der mit der gemittelten Drehzahl am Segmentanfang ermittelt wurde. Dies geschieht unter Berücksichtigung von Programmlaufzeiten zur Berechnung des Winkels nach dem Wake-Up, dem Eintragen der Winkel Mvₒₙ und MV_{off} und der maximal möglichen Beschleunigung. Der Winkelwert für die Erzeugung des dynamischen Wake-Ups WUP-D wird nach der Berechnung beim statischen Wake-Up in die Comparestrukturk der Winkeluhr eingetragen.

Für die Lage der statischen Wake-Ups heißt das, daß sie so weit vor dem oberen Totpunkt liegen müssen, daß die Berechnung der Winkel für Förderbeginn und Förderdauer und dem dynamischen Wake-Up WUP-D, das Eintragen des Winkels des dynamischen Wake-Ups WUP-D, das Erreichen des dynamischen Wake-Ups, die Neuberechnung des MVₒₙ-Winkels und das Eintragen der Winkel Mvₒₙ und MV_{off} in die entsprechenden Compare-register der Winkeluhr innerhalb der Zeit bis zum Erreichen des Winkels MVₒₙ abgearbeitet werden kann.

Der dynamische Wake-Up-Interrupt WUP-D veranlaßt den Controller den Winkel Mvₒₙ basierend auf der Momentandrehzahl möglichst dicht am tatsächlichen MVₒₙ₋^{W}inkel zu berechnen. Nach der Berechnung des MVₒₙ-Winkels werden die Winkel Mvₒₙ und MV_{off} in die entsprechenden Compare-Register eingetragen.

Ausgehend von verschiedenen Größen bestimmt der Controller die Winkelstellung der Kurbelwelle, bei der er die nächsten Berechnungen startet. Diese Winkelstellung übermittelt er dem Gate-Array. Das Gate-Array sendet dann ein Interrupt-signal an den Controller, wenn die Winkelstellung erreicht ist.

## Patentansprüche

1. Steuersystem einer Brennkraftmaschine, insbesondere einer Dieselbrennkraftmaschine, bei der wenigstens ein Magnetventil den Beginn und das Ende der Kraftstoffzumessung festlegt, mit ersten Mitteln (130), die die Signale wenigstens eines ersten Sensors (110), der eine Vielzahl von Inkrementimpulsen erzeugt, auswerten, wobei der Abstand zwischen zwei Inkrementimpulsen in eine Vielzahl von Teilinkrementen aufgeteilt ist, mit zweiten Mitteln (140), die die Signale wenigstens eines zweiten Sensors auswerten, wobei das zweite Mittel zu vorgebbaren Zeitpunkten eine Winkelgröße an das erste Mittel gibt, daß ein erstes Zählmittel die Inkrementimpulse und zweites Zählmittel die Teilinkremente zählt, daß ein Signal ausgelöst wird, wenn die ersten und zweiten Zählmittel einen von der Winkelgrößen abhängigen Wert erreichen.

2. System nach Anspruch 1, dadurch gekennzeichnet, daß bei jeder Änderung des ersten Zählmittels das zweite Zählmittel auf Null gesetzt wird.

3. System nach einem der Ansprüche 1 und/oder 2, dadurch gekennzeichnet, daß bei Erreichen eines vorgegebenen Wertes des ersten Zählmittels das erste und das zweite Zählmittel auf Null setzbar sind.

4. System nach einem der Ansprüche 1 bis 3, dadurch gekennzeichnet, daß die ersten und/oder zweiten Zählmittel im ersten Mittel enthalten ist, und das Signal ausgelöst wird, wenn der Inhalt der Zählmittel der Winkelgröße entsprechen.

5. System nach einem der Ansprüche 1 bis 4, dadurch gekennzeichnet, daß ein Interrupt-Signal auslösbar ist, wenn das erste Zählmittel einen bestimmten Wert erreicht.

6. System nach einem der Ansprüche 1 bis 5, dadurch gekennzeichnet, daß ein Ansteuersignal für das Magnetventil auslösbar ist, wenn der Wert der Zählmittel größer und/oder gleich der vorgebbaren Winkelgröße ist.

7. System nach einem der Ansprüche 5 oder 6, dadurch gekennzeichnet, daß das Interrupt-Signal die Ermittlung der Winkelgröße durch das zweite Mittel auslöst.

## Claims

1. Control system for an internal combustion engine, particularly for a diesel internal combustion engine, in which at least one solenoid valve defines the start and end of fuel metering, having first means (130), which evaluate the signals from at least one first sensor (110) producing a multiplicity of incremental pulses, the spacing between two incremental pulses being split into a multiplicity of subincrements, having second means (140), which evaluate the signals from at least one second sensor, the second means passing an angle size to the first means at prescribable instants, [lacuna] in that a first counting means counts the incremental pulses, and a second counting means counts the subincrements, in that a signal is triggered when the first and second counting means reach a value which is dependent on the angle size.

2. System according to Claim 1, characterized in that the second counting means is set to zero whenever the first counting means changes.

3. System according to one of Claims 1 and/or 2, characterized in that the first and second counting means can be set to zero when a prescribed value of the first counting means is reached.

4. System according to one of Claims 1 to 3, characterized in that the first and/or second counting means are/is contained in the first means, and the signal is triggered when the content of the counting means corresponds to the angle size.

5. System according to one of Claims 1 to 4, characterized in that an interrupt signal can be triggered when the first counting means reaches a particular value.

6. System according to one of Claims 1 to 5, characterized in that a drive signal for the solenoid valve can be triggered when the value of the counting means is greater than and/or equal to the prescribable angle size.

7. System according to one of Claims 5 or 6, characterized in that the interrupt signal initiates the ascertainment of the angle size by the second means.

## Revendications

1. Système de commande d'un moteur à combustion interne notamment d'un moteur Diesel, selon lequel au moins une électrovanne fixe le début et la fin du dosage du carburant, comprenant,
• des premiers moyens (130) exploitant les signaux d'au moins un premier capteur (110) qui génère un grand nombre d'impulsions incrémentales,
• la distance entre deux impulsions incrémentales étant divisée en un grand nombre d'incréments partiels,
• des seconds moyens (140) qui exploitent les signaux d'au moins un second capteur,
• les seconds moyens donnant à des instants prédéterminés, une grandeur angulaire aux premiers moyens,
• un premier compteur compte les impulsions incrémentales et un second compteur compte les incréments partiels,
• on déclenche un signal lorsque le premier et le second compteurs ont atteint une valeur dépendant des grandeurs angulaires.

2. Système selon la revendication 1,
caractérisé en ce que
pour chaque variation du premier moyen de comptage, le second moyen de comptage est mis à zéro.

3. Système selon l'une des revendications 1 et/ou 2,
caractérisé en ce que
lorsqu'on atteint une valeur prédéterminée pour le premier moyen de comptage, ce premier moyen et le second moyen de comptage sont mis à zéro.

4. Système selon l'une des revendications 1 à 3,
caractérisé en ce que
les premiers et/ou les seconds moyens de comptage sont contenus dans un premier moyen et le signal est déclenché lorsque le contenu du moyen de comptage correspond à la grandeur angulaire.

5. Système selon l'une des revendications 1 à 4,
caractérisé en ce qu'
on déclenche un signal d'interruption lorsque le premier moyen de comptage atteint une valeur déterminée.

6. Système selon l'une des revendications 1 à 5,
caractérisé en ce qu'
on déclenche un signal de commande pour l'électrovanne lorsque l'état du moyen de comptage est supérieur et/ou égal à une grandeur angulaire prédéterminée.

7. Système selon l'une des revendications 5 ou 6,
caractérisé en ce que
le signal d'interruption déclenche la détermination de la grandeur angulaire par le second moyen.
